# EUROPEAN PATENT APPLICATION

(11) **EP 1 392 039 A1**
(43) Date of publication of application: **25.02.2004**
(21) Application number: 02726505.7
(22) Date of filing: 28.05.2002
(51) Int. Cl.: H04M 1/57, H04M 1/00

(54) **COMMUNICATION APPARATUS**

(30) Priority: 28.05.2001 JP 2001158751; 24.08.2001 JP 2001254336; 29.08.2001 JP 2001259295
(71) Applicant: MATSUSHITA ELECTRIC INDUSTRIAL CO., LTD., Kadoma-shi, Osaka 571-8501 (JP)
(72) Inventor: SHIMOMURA, Hiroki, Onojo-shi, Fukuoka 816-0962 (JP); KAJIWARA, Katsuyuki, Kasuya-gun, Fukuoka 811-2106 (JP); MITSUO, Sadaka, Kasuga-shi, Fukuoka 816-0824 (JP); TANAKA, Michiaki, Fukuoka-shi, Fukuoka 815-0031 (JP); HIRAI, Yuji, Fukuoka-shi, Fukuoka 811-1353 (JP); ISHIMURA, Yoshihiro, Fukuoka-shi, Fukuoka 810-0024 (JP); IKEDA, Yutaka, Onojo-shi, Fukuoka 816-0964 (JP)
(74) Representative: Grünecker, Kinkeldey, Stockmair & Schwanhäusser Anwaltssozietät
(86) International application number: PCT/JP2002/005145
(87) International publication number: WO 2002/098115

(57) **Abstract**

A communication apparatus of the present invention has a first storing unit for storing information detected by a caller information detector, a caller identifying unit for identifying a calling place of a caller based on the information stored in the first storing unit, a second storing unit for storing information of the calling place identified by the caller identifying unit, a third storing unit for storing predetermined information, and a controller for controlling a display unit to display combined information of the calling place information stored in the second storing unit and the predetermined information stored in the third storing unit. The communication apparatus has a controller for extracting voice data selected by a voice data selecting unit and controlling the voice converting unit to output a voice signal, when the plurality of voice data correspond to the caller information detected by the caller information detector. A telephone apparatus of the present invention has a voice creating unit for creating, from the caller information, two respective types of voice data in a predetermined frequency band and in a lower frequency band.

## Description

### TECHNICAL FIELD

The present invention relates to a communication apparatus such as a telephone apparatus capable of obtaining caller information via a line.

### BACKGROUND ART

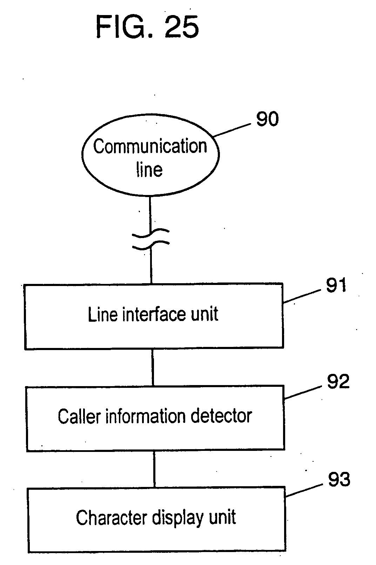

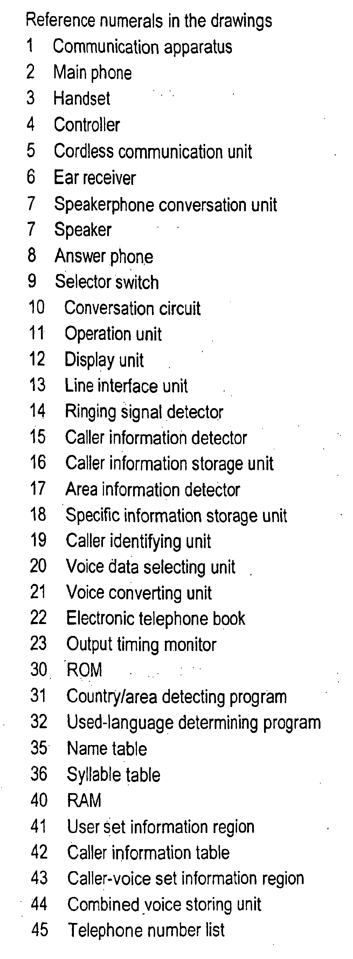

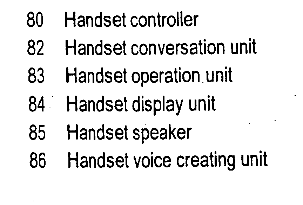

A conventional communication apparatus such as a conventional telephone apparatus will be hereinafter described with reference to Fig. 25.

In Fig. 25, communication line 90 is connected to line interface unit 91 for performing transmit-receive processing. Line interface unit 91 is connected to caller information detector 92. The caller information detector 92 detects caller information including a caller number fed from communication line 90 on receiving the information.

Caller information detector 92 is further connected to character display unit 93 for displaying character information obtained by transforming the caller information.

The conventional communication apparatus having this structure receives an incoming signal from communication line 90 with line interface unit 91, detects the caller information from the received signal with caller information detector 92, simply converts the detected caller information to character information with character display unit 93, and provides the character information to a user.

However, the conventional communication apparatus simply displays, as character information, a caller name, a caller identification (ID), and a telephone number included in caller information, so that the apparatus is disadvantageously inconvenient for a user.

### DISCLOSURE OF THE INVENTION

The present invention provides a communication apparatus having the following elements:
a caller information detector for detecting caller-related information fed from a communication line;
a first storing unit for storing the information detected by the caller information detector;
an identifying unit for identifying a calling place of the caller based on the information stored in the first storing unit;
a second storing unit for storing information of the calling place identified by the identifying unit;
a third storing unit for storing predetermined information;
a display unit for displaying information; and
a controller for controlling the display unit to display combined information of the calling place information stored in the second storing unit and the predetermined information stored in the third storing unit.

### BRIEF DESCRIPTION OF THE DRAWINGS

Fig. 1 is an overall block diagram of a communication apparatus in accordance with an exemplary embodiment of the present invention.
Fig. 2 is a schematic diagram of a specific information storage unit of the communication apparatus in accordance with the exemplary embodiment.
Fig. 3 is a schematic storage diagram of a country/area-number corresponding table of the communication apparatus in accordance with the exemplary embodiment.
Fig. 4 is a schematic diagram of a caller information table of the communication apparatus in accordance with the exemplary embodiment.
Fig. 5 is a flowchart of a set mode of the communication apparatus in accordance with the exemplary embodiment.
Fig. 6 is a flowchart of another set mode of the communication apparatus in accordance with the exemplary embodiment.
Fig. 7 is a flowchart of an operation of the communication apparatus in accordance with the exemplary embodiment.
Fig. 8 is a flowchart of another operation of the communication apparatus in accordance with the exemplary embodiment.
Fig. 9 is a flowchart of still another operation of the communication apparatus in accordance with the exemplary embodiment.
Fig. 10 is a schematic diagram of a name table of the communication apparatus in accordance with the exemplary embodiment.
Fig. 11 is a schematic diagram of a syllable table of the communication apparatus in accordance with the exemplary embodiment.
Fig. 12 is a schematic diagram of an alphabet table of the communication apparatus in accordance with the exemplary embodiment.
Fig. 13 is a schematic diagram of a telephone number list data of the communication apparatus in accordance with the exemplary embodiment.
Fig. 14 is a pattern diagram of a data format of the caller information received by the communication apparatus in accordance with the exemplary embodiment.
Fig. 15 is a pattern diagram of another data format of the caller information received by the communication apparatus in accordance with the exemplary embodiment.
Fig. 16 is a pattern diagram showing a structure of a data table of a read only memory (ROM) of a voice producing unit in the communication apparatus in accordance with the exemplary embodiment.
Fig. 17 is a pattern diagram showing another structure of the data table of the ROM of the voice producing unit in the communication apparatus in accordance with the exemplary embodiment.
Fig. 18 is a pattern diagram showing still another structure of the data table of the ROM of the voice producing unit in the communication apparatus in accordance with the exemplary embodiment.
Fig. 19 is a timing chart of bell sounding and voice output of a main phone in the communication apparatus in accordance with the exemplary embodiment.
Fig. 20 is a flowchart of voice output timing of the caller information of the communication apparatus in accordance with the exemplary embodiment.
Fig. 21 is a chart of stop timing of bell sounding and voice output timing in the communication apparatus in accordance with the exemplary embodiment.
Fig. 22 is a block diagram of a handset in the communication apparatus in accordance with the exemplary embodiment.
Fig. 23 is another block diagram of the handset in the communication apparatus in accordance with the exemplary embodiment.
Fig. 24 is a timing chart of bell sounding and voice output of the handset in the communication apparatus in accordance with the exemplary embodiment.
Fig. 25 is an allover block diagram of a conventional telephone apparatus.

### DETAILED DESCRIPTION OF PREFERRED EMBODIMENTS

A communication apparatus in accordance with an exemplary embodiment of the present invention will be described hereinafter with reference to the drawings.

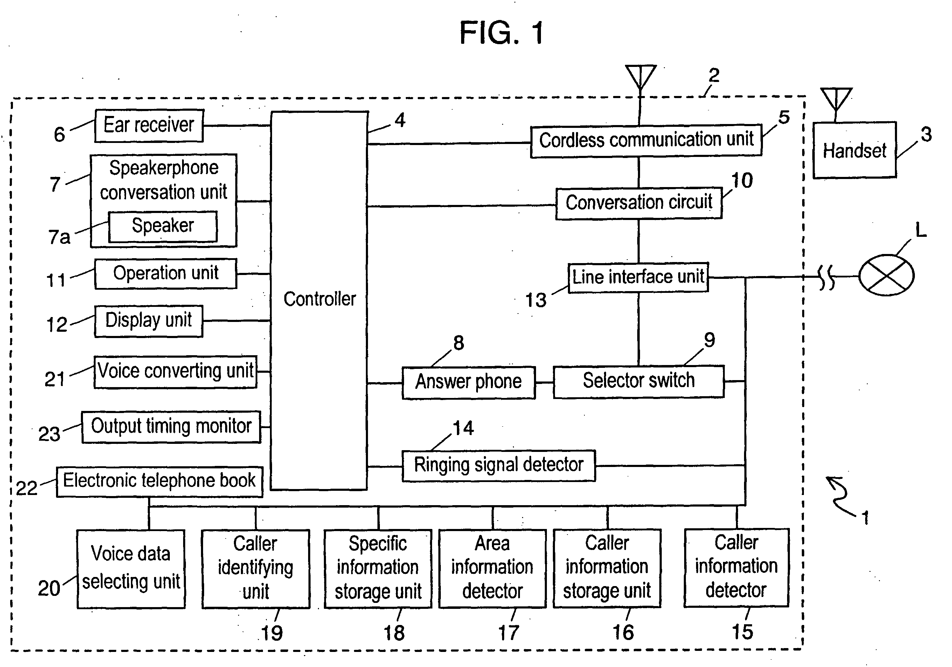

Fig. 1 is an overall block diagram of the communication apparatus in accordance with the exemplary embodiment of the present invention.

In Fig. 1, communication apparatus 1 includes main phone 2 connected to telephone line L and at least one handset 3. Main phone 2 can interactively communicate with handset 3 within a certain distance (100 to 150 m) in a cordless state. Main phone 2 communicates a voice signal with a party on the other end of the telephone line and interactively communicates with handset 3 in the cordless state through cordless communication unit 5, under control of controller (central processing unit (CPU)) 4. The communication unit 5 has a radio transmitter and a radio receiver.

Main phone 2 has ear receiver 6 connected to it through a cord. Lifting ear receiver 6 off the hook allows a cordless conversation with handset 3 (an internal conversation) and a conversation with the outside through a line (an external conversation). Main phone 2 has speakerphone conversation unit 7. When a switch (not shown) of speakerphone conversation unit 7 is pushed to perform off-hook, conversation with no hand is allowed. At this time, a voice is output through speaker 7a of speakerphone conversation unit 7.

Main phone 2 also has answer phone 8. When off-hook is not performed on either side of main phone 2 and handset 3 though a conversation comes from the line, answer phone 8 operates to record an incoming message. In this case, when off-hook is not performed though the bell sounds for a predetermined times (for example, six times), controller 4 switches selector switch 9 from conversation circuit 10 side to the answer phone 8 side. When a call is made, operation unit 11 is operated for dialing. A dialed number is displayed on display unit 12 to allow confirmation.

Controller 4 includes a CPU, a random access memory (RAM), and a ROM, and controls main phone 2 on the whole.

The call information is described hereinafter.

The call information will be essentially displayed, so that its data format is a text data format. There is a difference between call information of Japanese specifications and that of North American specifications at the present time. The information of the Japanese specifications is formed of only telephone number information, but the information of the North American specifications is formed of the telephone number information and name information. The information of the North American specifications is hereinafter employed.

In Fig. 1, conversation circuit 10 is connected to line interface unit 13 for performing transmit/receive processing in main phone 2. Line interface unit 13 is connected to ringing signal detector 14 for detecting a ringing signal and caller information detector 15 for detecting caller information. Operation unit 11 is used by a user to start or operate the communication apparatus.

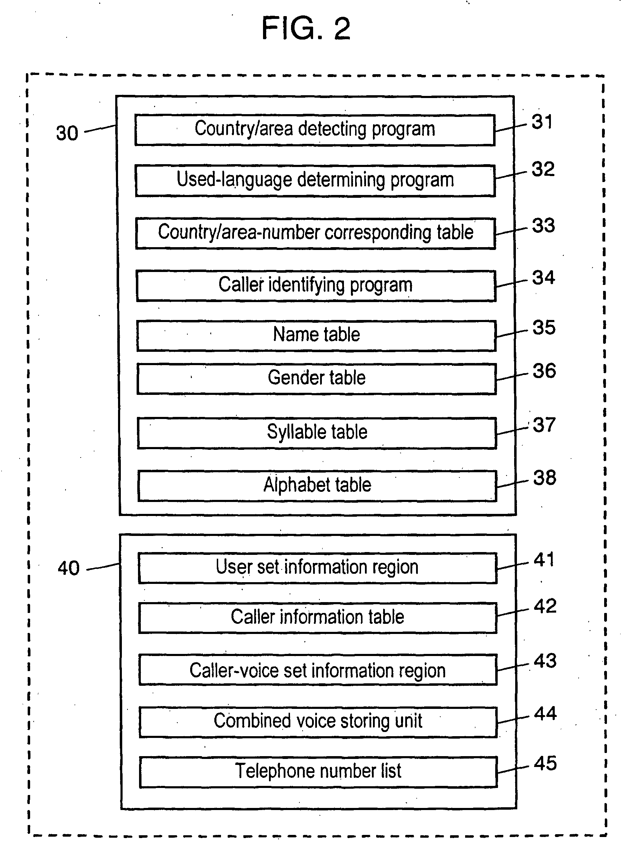

Controller 4 also stores the detected caller information such as "telephone number", "name", and "area information such as country number and area number" into caller information storage unit 16 as a first storing unit. Area information detector 17 extracts a country number and/or an area number of a country or the like where the caller exists, from the caller information stored in caller information storage unit 16. Specific information storage unit 18 stores area number corresponding table 33 (Fig. 2). Table 33 stores "character and voice information of country or area" corresponding to the country number or the area number, in relation to the country number or the area number. Voice converting unit 21 converts character information to voice information.

In Fig. 2, specific information storage unit 18 is divided into ROM 30 as a second storing unit and RAM 40 as a third storing unit. ROM 30 stores not only corresponding table 33 but also country/area detecting program 31 and used-language determining program 32. RAM 40 includes user set information region 41 preset by the user. ROM 30 and RAM 40 may be built in CPU 4 or replaced by external memories.

In the present embodiment, the user can perform the following various settings with operation unit 11 before using the communication apparatus. The setting information is stored in user set information region 41.
(A) To select and set one pronunciation from a plurality of pronunciations for a name.
(B) To select and set "area display mode" of displaying a calling area of a caller and "personal ID display mode" of displaying a company or a post of the caller.

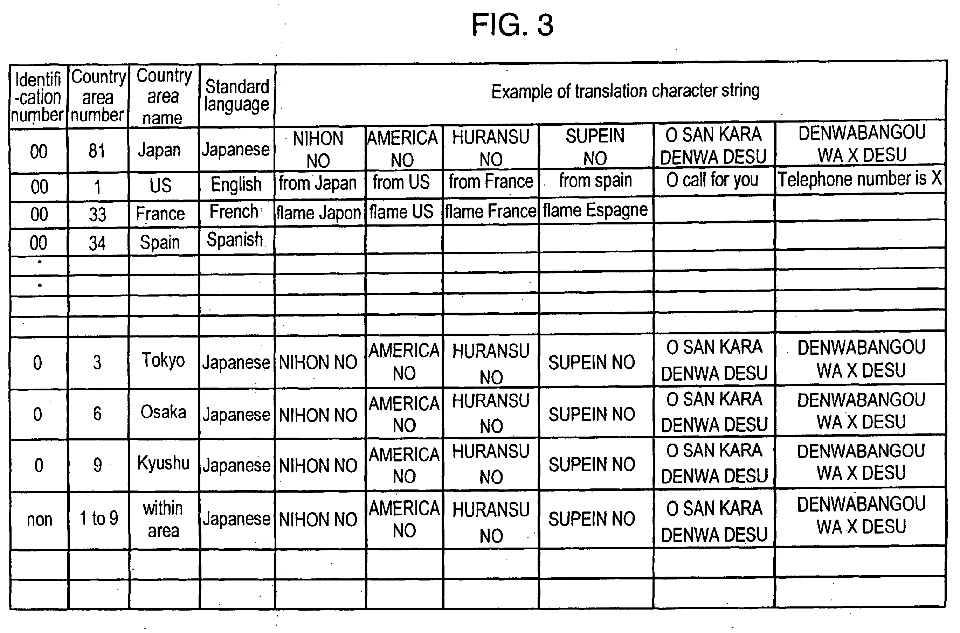

Fig. 3 is a schematic storage diagram of country/area-number corresponding table 33. Corresponding table 33 is employed in the "area display mode".

In Fig. 3, "identification number", "country/area-number", "standard language", and "bilingual character string" are arranged laterally in that order in country/area-number corresponding table 33. Identification "00" indicates a foreign country, "0" indicates the outside of the same area, and "null (blank)" indicates the inside of the same area.

The adjacent column of identification "0" stores "country/area-number (area name in Japan)", and the further adjacent columns of it store "standard language (Japanese)", and "bilingual character string".

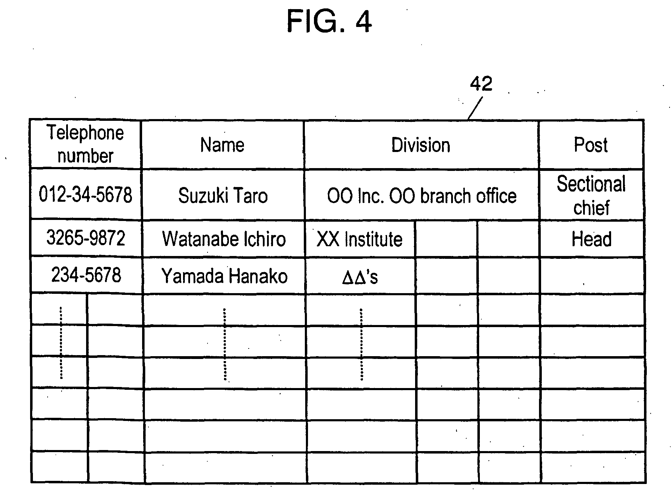

In Fig. 4, caller information table 42 stores character strings "telephone number", "name", "division and post". Caller information table 42 is employed in the "personal ID display mode".

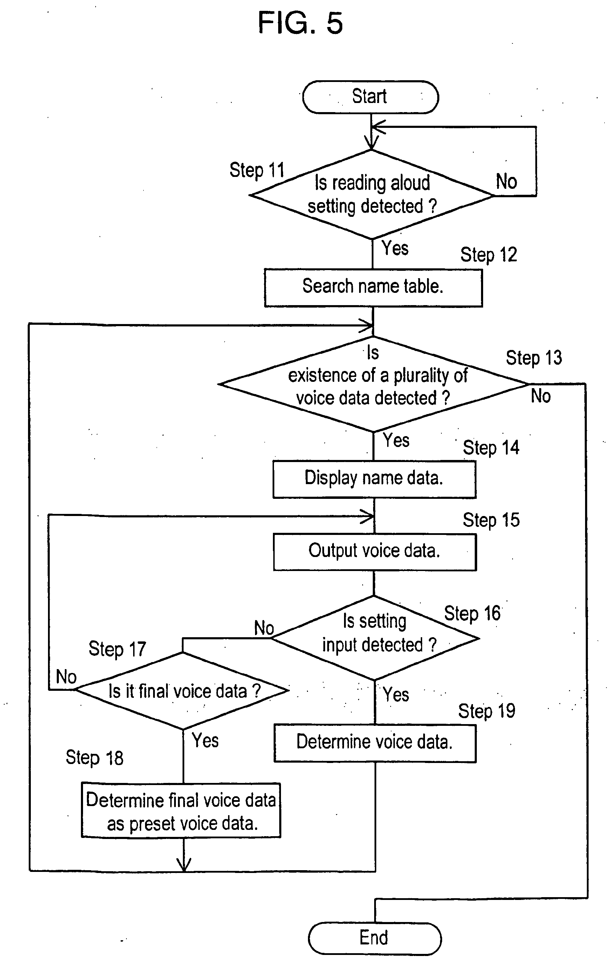

The setting method (A) by a user is described with reference to the flowchart of Fig. 5.

When the user of the communication apparatus operates operation unit 11 to select the setting mode by the reading (pronunciation) method, controller 4 detects this selection (step 11).

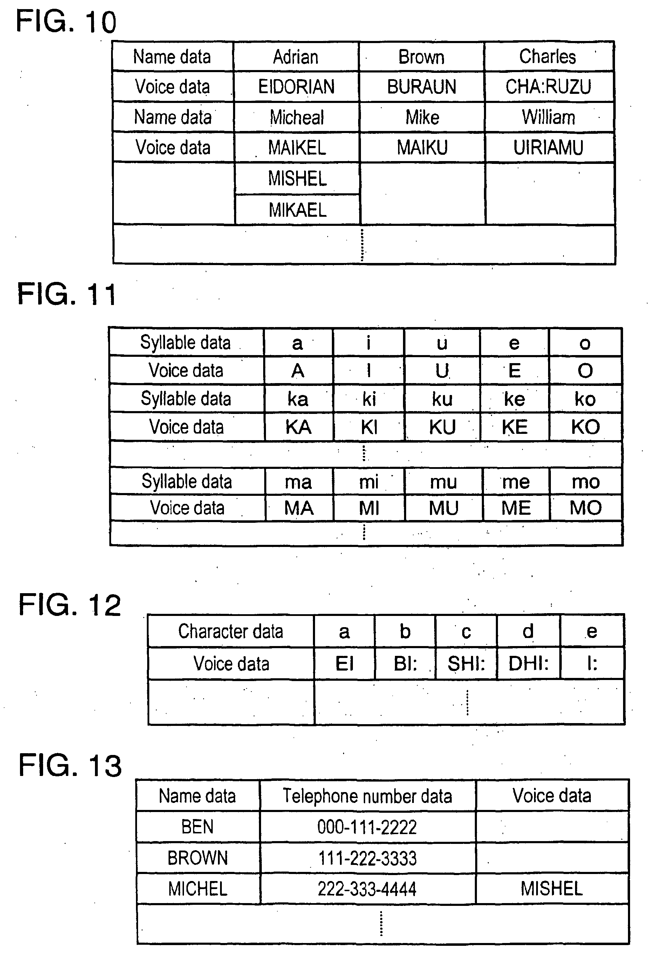

Controller 4 searches name table 35 shown in Fig. 10 stored in ROM 30 (step 12) and retrieves name data each of which relates to a plurality of registered voice data (step 13).

Next, on finding a name data related to a plurality of registered voice data (including pronunciation data) in name table 35, controller 4 displays the name data (step 14), extracts one of voice data registered in name table 35, and outputs it to voice converting unit 21 (step 15). Voice converting unit 21 converts the input signal to an analog signal and outputs the analog signal to speaker 7a.

Controller 4 then waits a certain time for a set command input from a user via operation unit 11 to arrive via voice data selecting unit 20 (step 16). When no set command arrives in the certain time, controller 4 determines whether or not the presently output voice data is the last voice data (step 17).

When the output voice data is not the last voice data, controller 4 extracts the next voice data from name table 35, and outputs it to voice converting unit 21 (step 15).

When a set command from voice data selecting unit 20 arrives at controller 4 (step 16), controller 4 determines the present voice data as voice data corresponding to the name data, and registers the voice data in name table 35 (step 19).

On determining that the voice data output in step 17 is the last voice data, controller 4 determines a predetermined voice data as the voice data corresponding to the name data and registers it into the name table (step 18). After the determination of the voice data in step 18 and step 19, the process returns to step 13. In step 13, controller 4 retrieves next name data related to a plurality of registered voice data. Controller 4 repeats the steps discussed above when there is such a name data, and stops the setting when there is not such the name data.

A setting operation for (A) is specifically described with reference to the name table shown in Fig. 10.

Controller 4 firstly searches name table 35, and finds name data "MICHAEL" having a plurality of voice data (step 13). Controller 4 extracts the name data from name table 35 and displays "MICHAEL" on display unit 12 (step 14).

Controller 4 then extracts voice data "maikl (phonetic symbol)" registered firstly, and sends it to voice converting unit 21. The "maikl" is output from speaker 7a (step 15).

Controller 4 then waits the certain time for a user to input a command via operation unit 11 and voice data selecting unit 20. When there is no input, controller 4 determines whether or not the voice data is the last voice data in step 17.

The voice data is not the last voice data, so that controller 4 extracts the next registered voice data "mishel (phonetic symbol)", and outputs it from speaker 7a via voice converting unit 21.

When a set command is input from voice data selecting unit 20, controller 4 determines the voice data "mishel (phonetic symbol)" as voice data of the name data "MICHEAL", and registers it in the name table (step 19). When the last voice data "mikael (phonetic symbol)" is output from speaker 7a in step 15 and any set command is not input in step 16, controller 4 discriminates the last voice data in step 17 and determines the firstly registered "maikel" as the voice data in step 18.

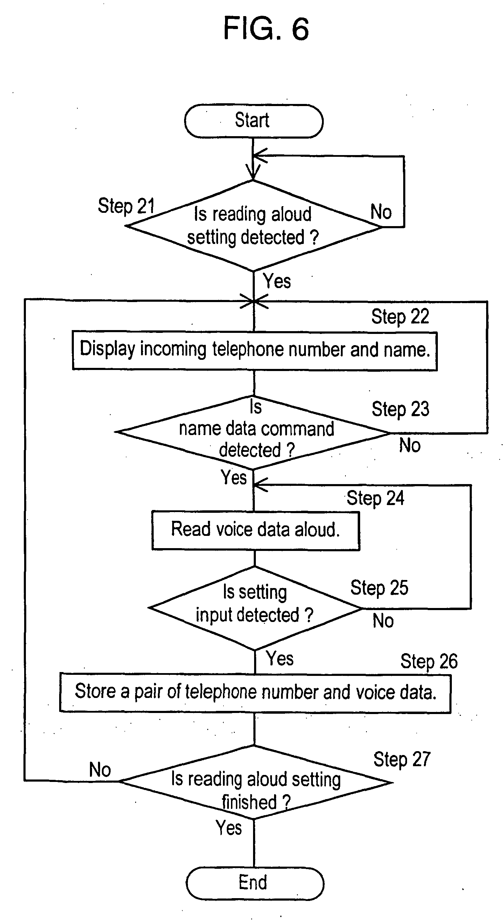

Next, a setting method of a creating pattern of the output voice data in (B) is described. Fig. 6 is a flowchart of the setting method.

When a user operates operation unit 11 to set a setting mode of a reading method, controller 4 detects this operation (step 21). Telephone number list 45 is an auxiliary storing unit of RAM 40, and stores the received telephone numbers and name data in a state where each telephone number is paired with each of name data. Controller 4 extracts the telephone numbers and name data stored in telephone number list 45 stored in RAM 40 in alphabetic order, and displays them on display unit 12 (step 22).

When no command of name data is input in step 23, controller 4 extracts the telephone numbers and name data from an arrival list in opposite order of arrival, and displays them on display unit 12. When a command of name data is input in step 23, controller 4 collates the commanded name data with name table 35 of Fig. 10 stored in ROM 30.

When the commanded name data matches with name data stored in name table 35, controller 4 extracts voice data corresponding to the name data. When there is no matched data in name table 35, controller 4 refers to syllable table 36 of Fig. 11 and alphabet table 38 of Fig. 12 and extracts voice data. The extracted voice data is then output to voice converting unit 21 and supplied as a voice from speaker 7a.

When a plurality of voice data accompanies the name data matching with the commanded name data in name table 35, controller 4 extracts the firstly registered voice data, outputs the data to voice converting unit 21, and outputs the data as a voice from speaker 7a (step 24).

Controller 4 then waits a certain time for a user to input a setting signal from voice data selecting unit 20 via operation unit 11 (step 25). When no setting signal is input for the certain time, controller 4 extracts a next voice data from name table 35 and supplies it to voice converting unit 21(step 24).

When a setting signal is input from voice data selecting unit 20 in step 25, controller 4 stores the voice data correspondingly to the telephone number of telephone number list 45 (step 26).

A setting operation for (B) is specifically described with reference to the telephone number list shown in Fig. 13.

Controller 4 displays name data "BEN" and telephone number data "000-111-2222" stored in the telephone number list on display unit 12 (step 22). When no command of name data is detected in step 23, controller 4 extracts next name data "BROWN" and telephone number data "111-222-3333" and displays them on display unit 12.

Name data and telephone number data are then similarly displayed in alphabetic order. When name data command is input from operation unit 11 after name data "MICHEAL" and telephone number data "222-333-4444" are displayed, controller 4 detects the command (step 23) and collates the commanded name data with the name data registered in name table 35 stored in ROM 30. Name data "MICHEAL" is registered in name table 35, so that controller 4 extracts first registered voice data "maikl (phonetic symbol)" and outputs it from speaker 7a (step 24).

Controller 4 then waits the certain time for an input from voice data selecting unit 20. When there is no input, controller 4 extracts next registered voice data "mishiel (phonetic symbol)" and outputs it from speaker 7a (step 24). When there is an input here from voice data selecting unit 20, controller 4 stores voice data "mishel (phonetic symbol)" correspondingly to telephone number data "222-333-4444" of the telephone number list (step 26).

The communication apparatus having the structure discussed above in accordance with the exemplary embodiment of the present invention will be described hereinafter with reference to the drawings.

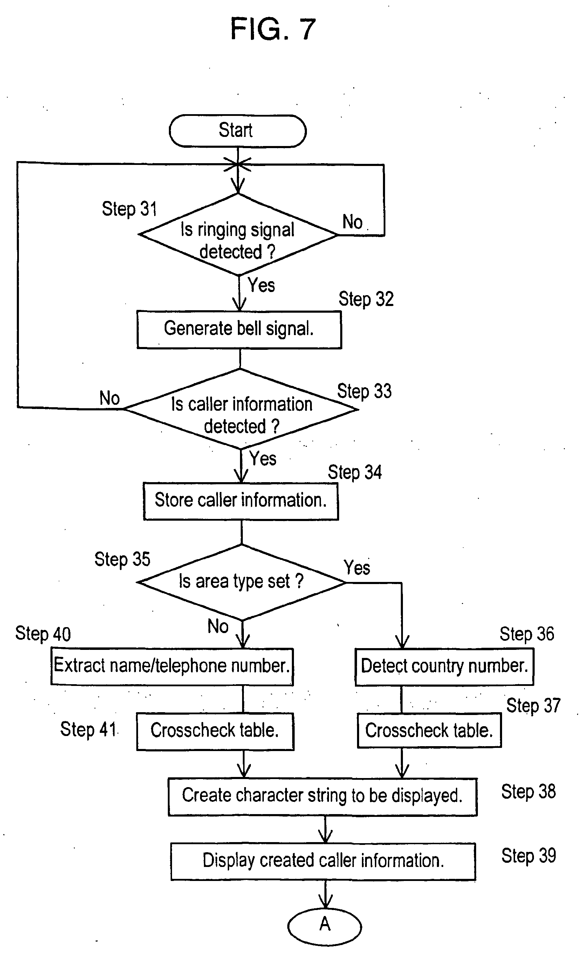

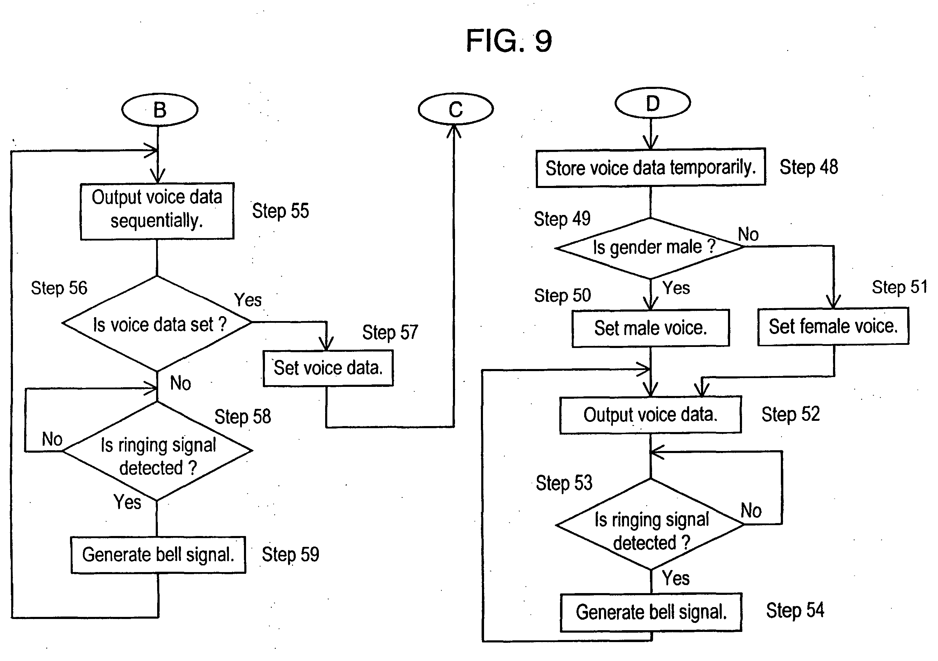

In the overall block diagram of Fig. 1 and flowcharts of Fig. 7 to Fig. 9, firstly, line interface unit 13 receives an incoming signal from a communication line.

In Fig. 7, controller 4 specifically monitors a ringing signal input from telephone line L with ringing signal detector 14. When a ringing signal comes from telephone line L, ringing signal detector 14 detects the ringing signal and outputs detection information of the detected ringing signal to controller 4 (step 31). Controller 4, on receiving the detection information, outputs a bell signal and generates a bell sound from speaker 7a (step 32).

In US, incidentally, the ringing signal is continuously output for about 2 s, and then the output is paused for about 4 s. This output is repeated at a similar cycle. Caller information is output between a first ringing signal and a second ringing signal.

When the ringing signal output is paused, the output of the bell signal finishes, and then caller information is fed from telephone line L, caller information detector 15 detects the caller information (step 33) and outputs it to controller 4. Controller 4 then stores the input caller information in caller information storage unit 16 of RAM 40 (step 34), and detects a set type set in user set information region 41 (step 35).

A case that the set type detected by controller 4 is "area display mode" is described.

CPU 4 operates country/area detecting program 31 stored in ROM 30, and extracts a caller area number from the caller information (step 36). When the first digit of the caller area number is other than "0", the information is recognized to come from the same area. When the first digits are "0 + figure", the information is recognized to come from an area other than the same area in Japan. When the first digits are "00", namely "0" continues twice, the information is recognized to come from abroad. Figures after "0" or "00" indicate an area number and a country number.

In country/area-number corresponding table 33, an area or a country is recognized (step 37). For example, "3" after "0" indicates a Tokyo area, "6" after "0" indicates an Osaka area, "1" after "00" indicates US, "33" after "00" indicates France, and "34" after "00" indicates Spain. Controller 4 collates the obtained area information with information stored in corresponding table 33, and recognizes a calling area of the caller.

Next, CPU 4 operates used-language determining program 32 stored in ROM 30. When user set information region 41 is stored in RAM 40, CPU 4 operates it to determine a used language. The used language can be set by a user with operation unit 11.

When country/area detecting program 31 recognizes that the caller information is transmitted from US, and the user set information is set as "English is used for receipt from US" for example, CPU 4 determines the used language as "English" with used-language determining program 32. When the user set information is set as "Japanese is used for receipt from US", CPU 4 determines the used language as "Japanese" with used-language determining program 32.

After determining the used language, CPU 4 extracts a required character string from country/area-number corresponding table 33 in ROM 30, and creates another character string by combination with the caller information (step 38).

When the determined used language is English, CPU 4 creates character string information "OO Call for you from US, telephone number is ××".

The character string information created by combination is transmitted and displayed on display unit 12 (step 39).

Next, a case that the set type in user set information region 41 is "personal ID display mode" is described.

Detected caller information is transmitted to CPU 4. CPU 4 operates caller specifying program 34 stored in ROM 30 to extract "caller name" and/or "caller number" from the caller information (step 40), and determines whether or not corresponding information exists in caller information table 42 based on the extracted data (step 41). CPU 4 extracts added information from caller information table 42 when the corresponding information exists, and transfers to the next step when no corresponding information exists.

A created character string is "Call for you from Mr. Suzuki, sectional chief, of OO branch office of OO Inc." when the caller information exists in caller information table 42, or is "Call for you from Mr. Suzuki, and the telephone number is 012345678" when the caller information does not exist (step 38).

Controller 4 transmits the created character string (display phrase) to the display unit and displays it on the display unit (step 39).

In the present embodiment, as discussed above, ROM 30 in specific information storage unit 18 stores name table 35 (Fig. 10), and a plurality of pronunciation methods (voice data) for a name corresponding to various languages are registered in name table 35. A user commands via operation unit 11 that voice data selecting unit 20 selects one desired data from the plurality of voice data, and sets and registers the voice data.

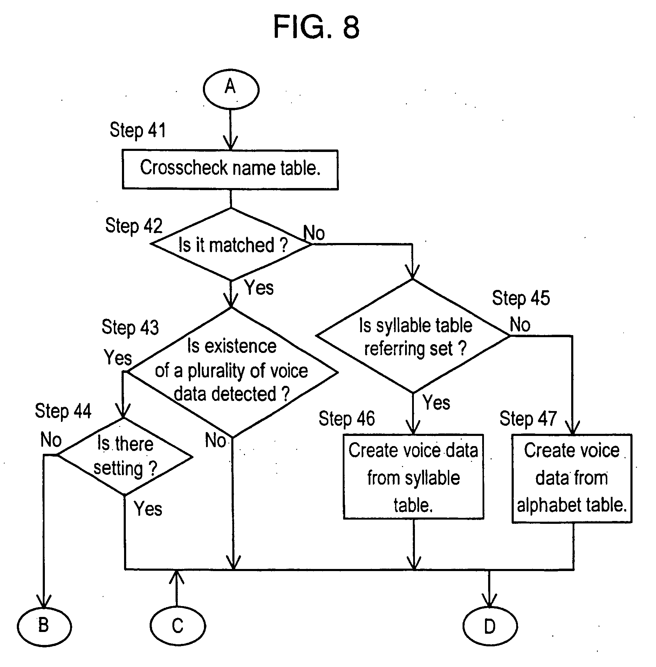

In the flowchart of Fig. 8, controller 4 collates the caller name data stored (detected) in caller information table 42 in RAM 40 with the name data in name table 35 of Fig. 10 stored in ROM 30 (step 41). When the caller name data matches with the name data in name table 35 (step 42), controller 4 determines whether or not a plurality of voice data exists in name table 35 (step 43). On determining that the plurality of voice data exists, controller 4 selects the voice data set by voice data setting discussed above (step 44), extracts the voice data, and temporarily stores it in caller-voice set information region 43 of RAM 40 (step 45).

Controller 4 determines whether the name indicates a male or a female based on the name data, and sets a range of the corresponding gender (discussed below).

Name table 35 previously registers typical name data of Americans. When name data that is not stored in name table 35 is input in step 42, controller 4 confirms whether it refers to "syllable table 36" of Fig. 11 or "alphabet table 38" of Fig. 12 based on the user set information stored in caller-voice set information region 43 of RAM 40 (step 45).

When syllable table 36 is set, controller 4 refers to syllable table 36. In syllable table 36, as shown in Fig. 11, voice data corresponding to linking methods between consonants and vowels is registered. Controller 4 collates name table fed through telephone line L with the syllable table every syllable, creates voice data by combination with voice data stored correspondingly to the matched syllables (step 46), and temporarily stores the created voice data as voice data of the name data in combined voice storing unit 44 of RAM 40 (step 48).

When name data "AKIO" is fed through telephone line L, for example, controller 4 extracts voice data corresponding to syllables "A", "KI", and "O" from table 36 of ROM 30, stores the voice data in unit 44 of RAM 40, and outputs the voice data.

Here, it is assumed that name data "Mike" is not registered in name table 35. When controller 4 refers to syllable table 36, voice data becomes "mike" and accurate information cannot be sent to the user.

When alphabet table 38 is previously set to be used in this case, the process proceeds from step 38 to step 47. In these steps, name data "Mike" is decomposed as four alphabets, voice data is extracted in the detected order by caller information detector 15, and voice signals "em", "ai", "kei", and "i:" are output. This method is not a reading (pronouncing) method of a name itself, but allows sending of accurate information to the user.

A voice range is automatically set based on gender related to the name in step 49, and then voice of the voice range adapting to the setting of male or female voice is produced in step 52.

The created voice data is fed to voice converting unit 21 to convert voice digital data to an analog signal, and then the analog signal is output from speaker 7a (step 52).

When name data fed through telephone line L is "MICHEAL" and preset voice data is "mishel (phonetic symbol)", voice signal "mishel" is output from speaker 7a via a male voice. Therefore, accurate voice information easy to understand can be transmitted to a user.

Thus, voice data includes phonetic symbol data.

When there is not a plurality of voice data in step 43, controller 4 extracts voice data registered correspondingly to the name data.

After the output of the voice data is finished, controller 4 waits for the input of the ringing signal from the telephone line (step 53). When ringing signal detector 14 detects the input of the ringing signal, controller 4 outputs a bell signal during continuation of the input of the ringing signal similarly to step 31 (step 54), and generates a bell sound. When the input of the ringing signal from the telephone line finishes and pauses, controller 4 returns to step 52. In step 52, controller 4 extracts voice data from set information region 43 of RAM 40 and generates the data from speaker 7a.

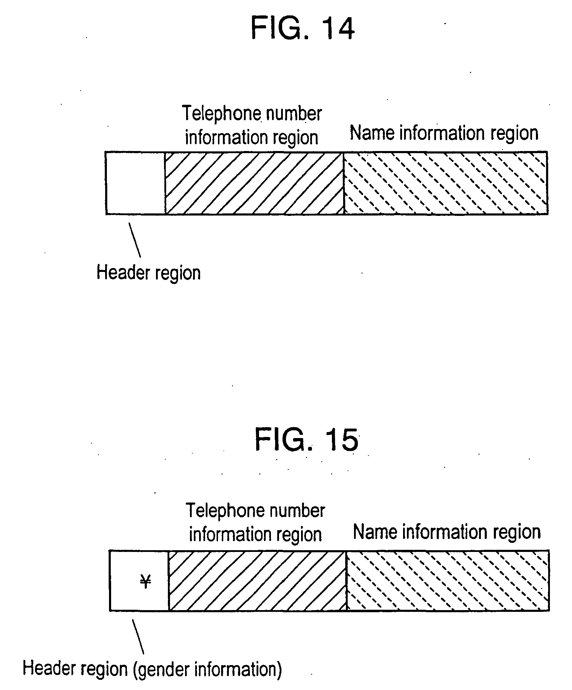

A data format of caller information, as shown in Fig. 14, includes "telephone number information region" for indicating a telephone number of a caller and "name information region" for indicating a name of a caller. The name information is formed of 15 characters or less, and has "family name" before "first name", as shown in a telephone directory.

In other words, name "GEORGE BUCHER" is written as "BUCHER GEORGE" in the name information.

Here, the caller information is formed of the telephone number information and the name information. However, as shown in Fig. 15, the format of the caller information may be changed so that a flag (¥ in Fig. 15) is set in the header region (or the footer region) to provide gender information and indicate the gender of the name information.

For example, the gender information is "male" when no flag is set, and is "female" when the flag is set. The changed format of the caller information has the following advantage. When a name has characters exceeding 15 characters, for example, when the name is "CHATHALINE BISSET", the name information is "BISSET CAHTALINE" in the former format and hence a part of the "first name" data used for determination of the gender is erased. When a flag is set in the header region in the latter format, however, the gender information indicates "female".

A method of determining a gender based on the "first name" data of the name information in the caller information will be described later in detail.

When the bell signals come from the telephone line, a caller announcing service transmits caller information between the bell signals. Controller 4 then operates, caller information detector 15 receives the caller information, and caller information storage unit 16 instantly stores it.

Controller 4 then extracts the caller information stored in storage unit 16, and transmits the caller information as received to display unit 12 including a liquid crystal display (LCD) and voice converting unit 21.

The contents of the caller information transmitted to display unit 12 are displayed in characters, and the caller information transmitted to voice converting unit 21 is converted to voice data. Voice converting unit 21 essentially includes a CPU, a RAM, and a ROM, and works as a secondary controller following controller 4. Voice converting unit 21 can create voice data corresponding to either of male tone and female tone. The tone is initially set at the male tone, and is changed to the female tone by operating operation unit 11. The tone may be always set at the female tone.

Voice converting unit 21 analyzes the gender of the received caller information based on "first name" data in the "full name" data in the caller information, and creates voice data having the male or female tone based on the analyzed result. However, a format of the created voice data slightly depends on a required function, as shown in the following example.

When caller information is changed from only "telephone number information" to "telephone number information and name information" in Japan, the name information comes as data of phonogram such as katakana. In this case, when the data of the phonogram is converted into voice data as it is and read aloud, the voice data can pass as a name. In North America, however, name information is formed by data of phonogram such as alphabet. In this case, the data does not pass as a name when the data is read aloud similarly to the katakana. In a region such as North America where name information formed by data of phonogram such as alphabet comes, voice converting unit 21 is required to have the following function. This function analyzes a name reading method based on spelling of the phonogram such as alphabet, and sets the data of phonogram so that the data passed as a name.

When the name reading method must be analyzed, a CPU as a voice creating unit having a name voice creating function must be used in voice converting unit 21. Voice converting unit 21 analyses a gender based on the "first name" data in the name information, so that voice converting unit 21 is required to have the name voice creating function as necessary in addition to a gender analyzing function. In the present embodiment, controller 4 performs the function.

The gender analyzing function of voice converting unit 21 is then specifically described.

In the determining method of a gender, "first name" data and additional data of gender based on the "first name" data are previously stored, and "first name" data of received caller information is collated with the stored "first name" data to determine the gender.

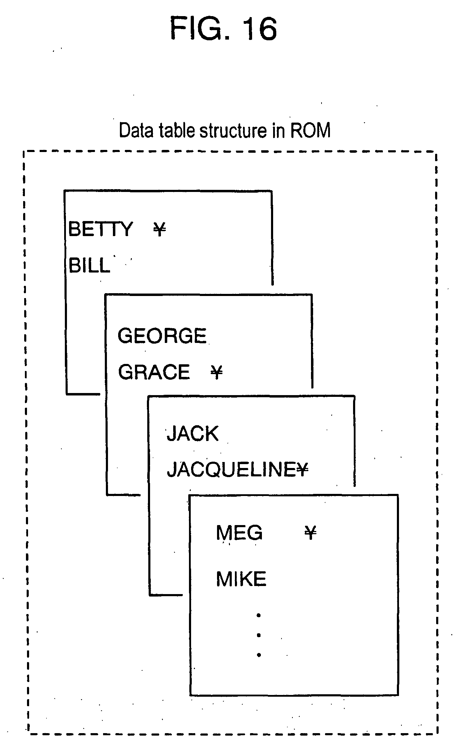

In other words, as shown in Fig. 16, male and female "first name" data such as "BETTY", "BILL", ..., "GEORGE", "GRACE", ..., "JACK", "JACKQUELINE", ..., "MEG", "MIKE", ... is previously stored in gender-segregated data table 36 in ROM 30 of specific information storage unit 18, and data indicating gender is attached to each "first name" data. For example, "GEORGE" has data indicating male and "GRACE" has data indicating female. Flag "¥" indicates female in Fig. 16.

It is assumed that "BUCHER GEORGE" is extracted as name information from the received caller information, for example. The CPU of the voice creating unit then searches data table 36 in the ROM shown in Fig. 16 for "first name" data "GEORGE". Data "GEORGE" exists in page "G" in the table, and "GEORGE" is indicated to be a male name with additional data indicating the gender of "GEORGE". CPU 4 determines "GEORGE" is a male name.

It is assumed that "BISSET JACQUELIN" is extracted as name information from the received caller information, for example. The CPU 4 of voice converting unit 21 then searches data table 36 in the ROM shown in Fig. 16 for "first name" data "JACQUELIN". In this table, "JACQUELIN" does not exist in page "J" but "JACQUELINE" including "JACQUELIN" exists. "JACQUELINE" is indicated to be a female name with additional data indicating the gender of "JACQUELINE". CPU 4 determines "JACQUELIN" is a female name.

The communication apparatus of the present embodiment sets that a voice range having a low frequency indicates male voice and a voice range having a high frequency indicates female voice, thereby discriminating between the male voice and the female voice.

Voice converting unit 21 firstly determines whether the name information is read aloud in a male tone or a female tone, based on analysis result of the name information. Voice converting unit 21 then converts the name information as text data to voice data using a data processing system (DPS) technology. The tone used in this time is a tone of the gender determined based on the "first name" data of the name information.

In converting the text data of the name information to the voice data, voice converting unit 21 refers to the voice data stored in ROM 30. The voice data stored in the ROM is described.

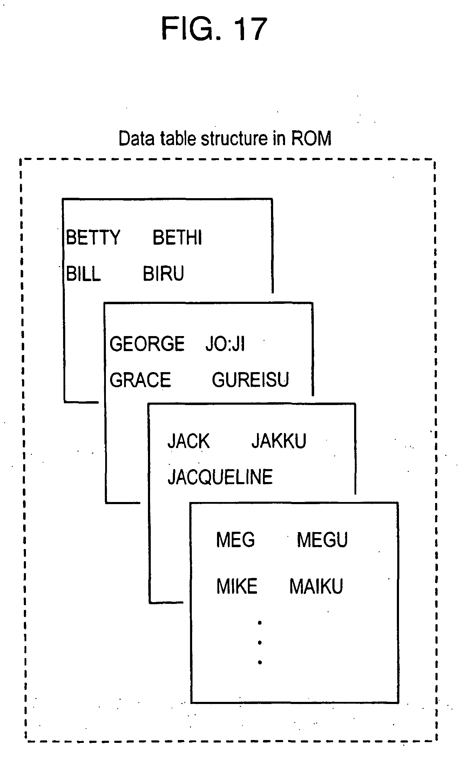

Frequently used text data is preferably classified by "family name" and "first name", collectively converted to voice data, and stored in ROM 30. An example related to "first name" is described with reference to Fig. 17. It is more convenient that frequently used text data such as "GEORGE" and "MIKE" is collectively converted to voice data such as "JO:JI" and "MAIKU". However, all data including less frequently used data of "family name" and "first name" cannot be stored in the ROM. Therefore, the less frequently used data is divided into several syllables, and the syllables are previously stored in the ROM. At this time, voice data of the name information is formed by combining the syllables.

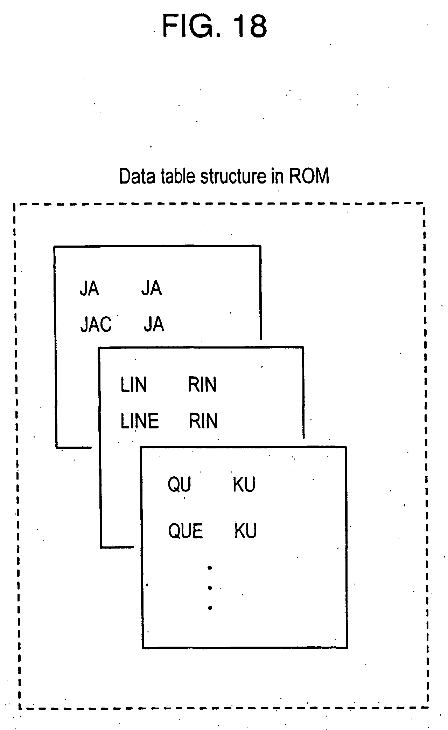

When "JACQUELIN" is less frequently used "first name" data, for example, voice data corresponding to "JACQUELIN" is extracted from divided voice data "JAC",..., "QUE",..., "LIN",... as shown in Fig. 18, and "JAC", "QUE", and "LIN" are combined to form voice data "JA•KU•RIN".

Voice data stored in ROM 30 may be either or both of the following voice data:
voice data converted from one full word of "family name" or "first name" as shown in Fig. 17, and
voice data converted from divided parts of one word of "family name" or "first name" as shown in Fig. 18.
When only voice data converted from one full word is stored in ROM 30, no voice data corresponding to the name information in the received caller information can exist in ROM 30. In this case, when the name information is text data formed of an alphabet, the alphabet must be converted into voice data character by character. For example, "JACQUELIN" must be converted into voice data "JEI•EI•SHI:••••" character by character.

The incoming caller information is stored in caller information storage unit 16, then extracted from caller information storage unit 16 by controller 4, and transmitted to display unit 12 and voice converting unit 21. At this time, controller 4 collates the caller information with the telephone number information registered in electronic telephone book 22. Electronic telephone book 22 is linked to the telephone number list shown in Fig. 13 with respect to the telephone numbers.

When the caller information matches with any of telephone numbers registered in electronic telephone book 22, the caller information is processed by a method discussed later. However, a case where the caller information matches with none of telephone numbers registered in electronic telephone book 22 is described.

When the incoming caller information includes name information, voice converting unit 21 analyzes a reading method and a gender of a name from the name information as necessary, and converts the name information into voice data having a male or female tone. Voice converting unit 21 creates voice data having a male tone when the gender analysis result of the caller indicates "male", and creates voice data having a female tone when the gender analysis result of the caller indicates "female".

The converted voice data is fed to speaker 7a as an example of a voice output unit, and the name information is read aloud in the male or female tone.

When the name information comes as phonogram data formed of alphabet "BUCHER GEORGE" as in North America, voice converting unit 21 analyses a reading method of the name to result in "BUCCHA: JO:JI (phonetic symbol)" and determines the gender is "male". Voice converting unit 21 converts the phonogram data into voice data "BUCCHA: JO:JI" having a male tone. The name information is read aloud as "BUCCHA: JO:JI" in the male tone from speaker 7a.

If the gender analysis based on the name information ends in failure, voice converting unit 21 converts the name information into voice data in response to the presently set male or female tone. A male tone is initially set, so that the presently set tone is the male tone when initial setting is not changed or a female tone when initial setting is changed.

When the format of the caller information is changed to that shown in Fig. 15, controller 4 can recognize gender information by checking the header region of the caller information. In other words, the gender is "male" when no flag is set in the header region, and the gender is "female" when a flag is set in the header region.

When controller 4 determines a gender of the received caller information, voice converting unit 21 does not perform the gender determination of the caller information. That is because controller 4 has precedence over voice converting unit 21. Voice converting unit 21 analyzes a reading method of name information, and creates voice data having a male or female tone based on the gender determination of the caller information by controller 4.

The incoming caller information can include no name information. In this case, voice converting unit 21 creates voice data indicating no name information, and output a voice indicating no name information from speaker 7a. Voice converting unit 21 creates the voice data in response to the presently set male or female tone. A male tone is initially set, so that the presently set tone is the male tone when initial setting is not changed or a female tone when initial setting is changed.

When the incoming caller information has no name information because the caller telephone number is blocked, for example, voice converting unit 21 creates voice data "HITUUCHI" and outputs "HITUUCHI" aloud from speaker 7a. In North America, voice "private caller" is output aloud.

When the incoming caller information has no name information because the caller exists outside the area, for example, voice converting unit 21 creates voice data "CHIIKIGAI" and outputs "CHIIKIGAI" aloud from speaker 7a. In North America, voice "out of area" is output aloud.

When the incoming caller information has no name information but has only telephone number information, for example, voice converting unit 21 creates voice data "DENWABANGOUNOMI" and outputs "DENWABANGOUNOMI" aloud from speaker 7a. In North America, voice "number available" is output aloud. In Japan, combined voice "CHIIKIGAI DENWABANGOUNOMI" may be output aloud.

When controller 4 collates the telephone number of the incoming caller information with the telephone numbers registered in electronic telephone book 22 to find that there is a matched telephone number in electronic telephone book 22, controller 4 checks for existence of information attached to the matched telephone number. The attached information includes gender information (for example, a flag is set for female) indicating a gender, and called party information indicating a correspondence between a caller and a called party. When there is the gender information, controller 4 extracts the gender information, determines the gender of the caller information, and transmits the gender information to voice converting unit 21. Voice converting unit 21 creates voice data having a male or female tone in response to a command from controller 4.

A caller reading method is performed as discussed above. When there is the called party information, controller 4 extracts the called party information and transmits it to voice converting unit 21. Voice converting unit 21 converts information "a call from who (caller) to who (called party)" into voice data in response to a command from controller 4.

When a caller name is "ISHIHARA SHINNOSUKE" (gender information indicates male) and a called party name is "KOIZUMI JUNJIROU", voice converting unit 21 creates voice data "a call from ISHIHARA SHINNOSUKE to KOIZUMI JUNJIROU" having a male tone corresponding to the gender of the caller.

When call waiting is taken during a conversation, caller information of a caller having taken the call waiting comes from the caller announcing service. Controller 4 and voice converting unit 21 analyze the incoming name information on receiving the call waiting, and convert the name information to voice data having a male or female tone. A receiving unit of ear receiver 6 as an example of a second voice output unit reads aloud the voice data of the caller name.

When operation unit 11 is previously operated to change the setting, the voice data can be read aloud from speaker 7a as an example of a voice output unit. The name of the caller of the call waiting is thus read aloud, so that a user can determine whether or not the switching to the caller is required.

Incidentally, regarding the call waiting, muting is required so that a party during a conversation does not hear the name of the caller of the call waiting. When the muting is so prolonged, however, the party during the conversation can feel uncomfortable. For obtaining an effect equivalent to the muting, a name of the caller of the call waiting is output at a whispering volume level together with a transmission signal from the conversation party. The name of the caller of the call waiting does not thus leak to the conversation party.

Reading timing of the caller information, namely voice output timing from speaker 7a, must be prevented to overlap with bell sound. Output timing monitor 23 monitors approval or non-approval of the reading timing of the caller information. Output timing monitor 23 monitors length of cumulative time of bell sounding and time length having no incoming bell after a bell comes, thereby allowing the voice output of the caller information between the incomings of bells.

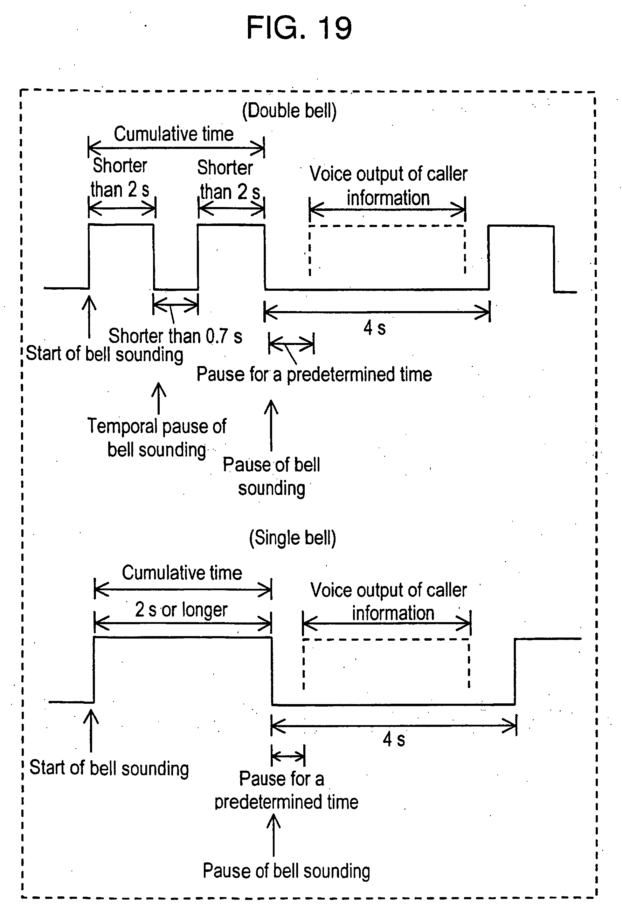

The bell includes a single bell and a double bell as shown in Fig. 19, so that the caller information must be output aloud after a type of the incoming bell is determined. In Japan a single bell is used, and in North America a used type depends on an area. In the case of the double bell, time for the voice output of the caller information can be secured only after the second bell sound. Output timing monitor 23 must determine whether sound of the double bell is temporarily pausing during the bell sounding or is pausing after the bell sounding.

A required time for individual sounding of the double bell is shorter than 2 s, the temporal pausing time between the first sound and the second sound is 0.7 s, and the cumulative time is 2 s or longer than, as shown in Fig. 19. Pausing time of 4 s is interposed between two double bells. The cumulative time for the sounding of the single bell is 2 s or longer, and pausing time of 4 s is interposed between two single bells.

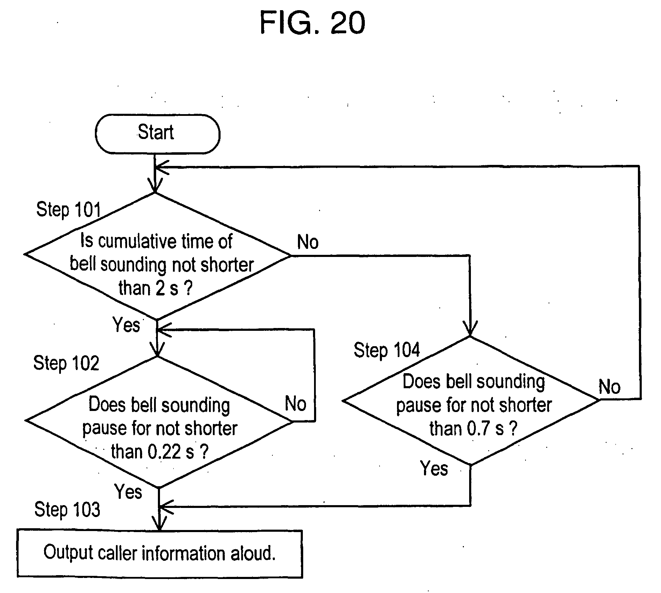

The determination of the pausing of the bell sounding is performed based on the length of the cumulative time of the bell sounding and the length of the pausing time of the bell sounding as shown in the flowchart of Fig. 20. In step 101, the process branches off depending on whether or not the cumulative time of the sounding is 2 s or longer. When the cumulative time is 2 s or longer, the bell sounding is determined to pause soon and the process proceeds to step 102. In step 102, for providing slight time lag after a stop of the bell sounding, the process proceeds to step 103 when the bell sounding pauses for 0.22 s or longer. In step 103, the caller information is output aloud.

When the cumulative time of the bell sounding is shorter than 2 s in step 101, the process proceeds to step 104. When the double bell is used, it must be determined whether sounding of the double bell is temporarily pausing after the first sound or is pausing after the second sound. When second bell sounding occurs in a pausing time shorter than 0.7 s after first bell sounding in step 104, the double bell is determined to continue and the process returns to step 101. When the cumulative time of the sounding is 2 s or longer even in the case of the double bell, the process proceeds to step 102.

The routine of step 104 can also support a single bell of the Japanese specification where bell sounding finishes in 1 s. When the pausing time of the bell sounding is 0.7 s or longer, the bell sounding is determined to be during the longer pausing and the process proceeds to step 103. The caller information is output aloud in step 103. Thus, output timing monitor 23 monitors length of cumulative time of bell sounding and time length having no incoming bell after a bell comes, thereby allowing the voice output of the caller information between the incomings of bells.

In Fig. 19, the voice output of the caller information is performed during the pausing of the sounding of either of the double bell and the single bell, and the voice output must be finished before the next bell incomes. However, in some cases, the timing of next bell sounding approach before the voice output of the caller information is finished. Output timing monitor 23 therefore monitors time lapse after the finish of the bell sounding. When the voice output of the caller information continues, output timing monitor 23 prevents the voice output of any next coming bell and prioritizes the voice output of the caller information.

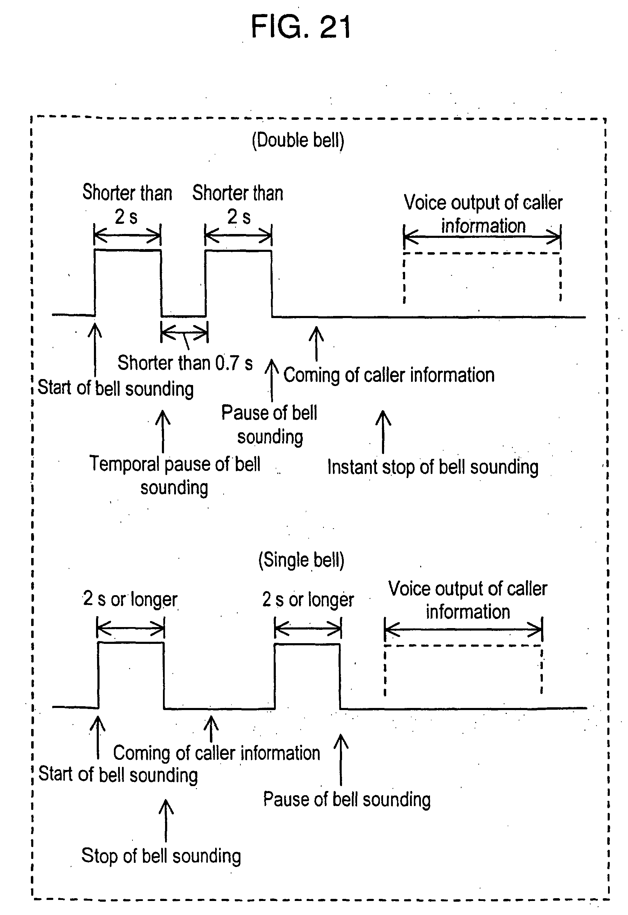

Incidentally, the following method can also prevent a bell sound from overlapping with voice output timing of the caller information from speaker 7a as an example of the voice output unit. In the methods, as shown in Fig. 21, bell sounding is stopped just after receiving the caller information, or the bell is sounded at certain times after receiving the caller information and then the bell sounding is stopped.

The method of outputting caller information aloud from main phone 2 of communication apparatus 1 of the present embodiment has been described; however, the caller information may be output aloud from handset 3 in communication apparatus 1 of the present invention.

The aloud outputting method of caller information from handset 3 will be described hereinafter with reference to Fig. 1, and Fig.22 to Fig.24.

In Fig. 1, handset 3 interactively communicates with main phone 2 in the cordless state through cordless communication unit 5 under control of controller 4.

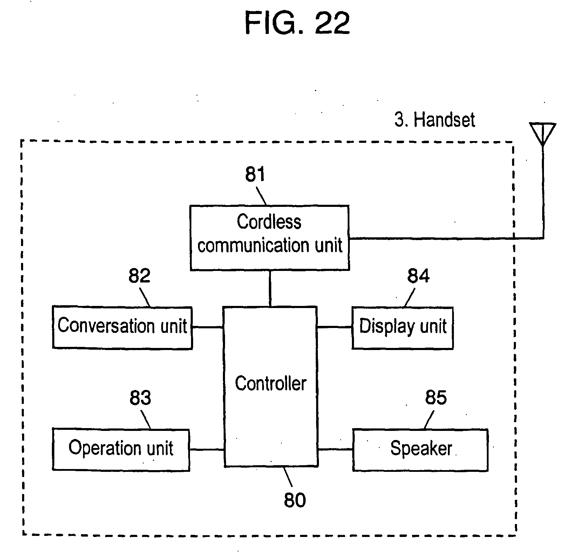

In Fig.22, handset controller 80 includes a CPU, a RAM, and a ROM, and entirely controls handset 3. Handset 3 has handset conversation unit 82, so that handset 3 can perform a conversation similarly to ear receiver 6 of main phone 2. Handset operation unit 83 has a function substantially similar to that of operation unit 11 of main phone 2. Handset display unit 84 has an area that is smaller than that of display unit 12 of main phone 2 but can display necessary and sufficient information. Handset 3 also has handset speaker 85 so as to produce an incoming bell sound. On receiving on/off data of the bell sound or on/off data of the speaker transmitted from main phone 2, handset speaker 85 can output the bell sound aloud or stop the output.

Handset 3 can produce an incoming sound by itself without relying on main phone 2, so that handset 3 may receive only incoming data (only a signal indicating the incoming) from main phone 2 and produce the incoming sound by itself with arbitrary timing without interlocking with an incoming sound on the main phone 2 side.

A reading method of caller information in handset 3 is described hereinafter.

Handset 3, on receiving voice data of the caller information transmitted from main phone 2, reads a caller name aloud in a tone corresponding to the gender of the caller from handset speaker 85 as an example of a voice output unit. When call waiting is taken during a conversation, handset 3 reads aloud the name of a caller of the call waiting in a tone corresponding to the gender of the caller based on voice data of the caller information transmitted from main phone 2. The aloud reading is performed from the receiving unit of handset conversation unit 82 as an example of a second voice output unit.

When handset 3 outputs the name of the caller of the call waiting at a whispering volume level together with a transmission signal from the conversation party similarly to main phone 2, the name of the caller of the call waiting does not leak to the conversation party.

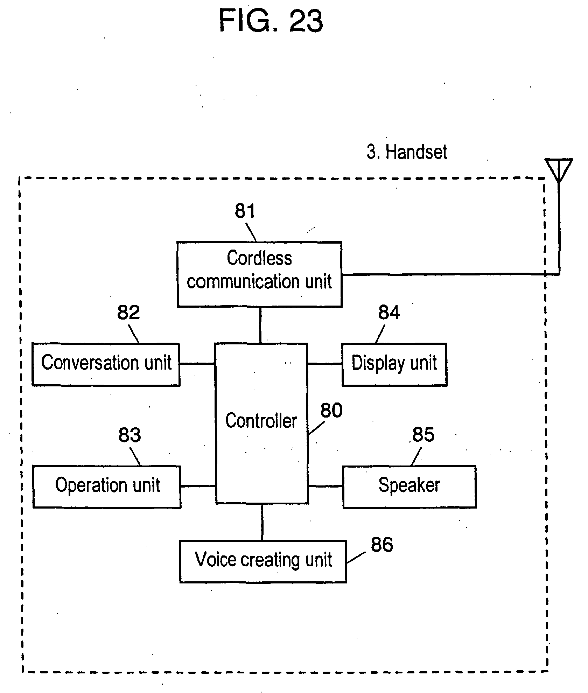

When handset 3 has handset voice creating unit 86 as shown in Fig. 23, caller information coming from the telephone line can be transferred from main phone 2 to handset 3, and handset 3 can analyze the name information of the caller information and read a caller name aloud in a male or female tone corresponding to the gender of the caller.

Handset voice creating unit 86 disposed in handset 3 shown in Fig. 23 may have a function perfectly equivalent to that of voice converting unit 21 of main phone 2 shown in Fig. 1.

However, when main phone 2 does not transfer the as-is caller information coming from the line to handset 3, but adds gender information provided by analyzing the caller information to the caller information and transfers them, voice creating unit 86 of handset 3 is not required to have an extracting function of the gender information.

Reading timing of the caller information of handset 3 having the voice reading unit is similar to that of main phone 2 shown in Fig. 7.

While, reading timing of the caller information of handset 3 having no voice reading unit is described as shown in Fig. 22.

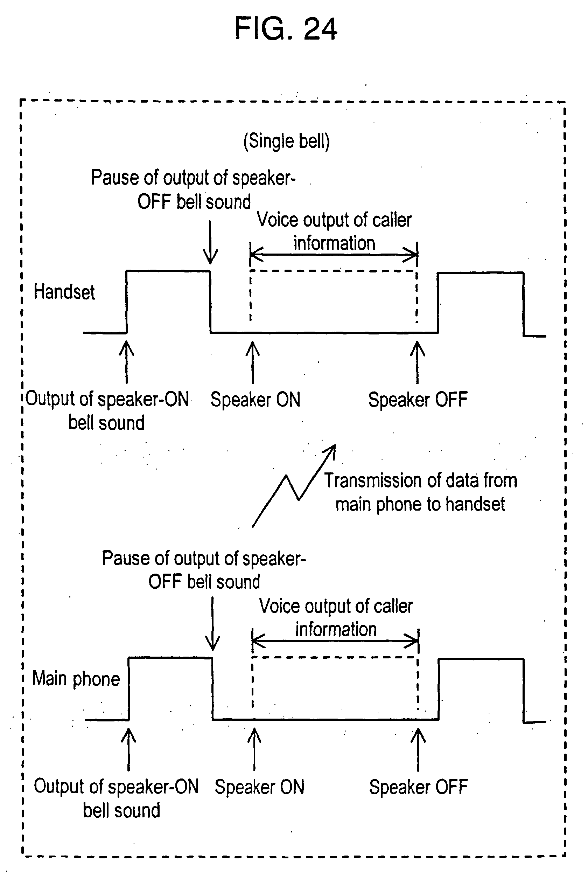

Handset 3 can output the caller information aloud between bell sounds similarly to main phone 2. It is voice data created by main phone 2 that handset 3 can output aloud, and the voice data has a male or female tone as discussed above. In Fig. 24, when a bell comes from the line, main phone 2 turns on speaker 7a and outputs the bell sound from speaker 7a. Main phone 2 simultaneously transmits, to handset 3, ON data of the speaker and ON data of the bell sounding.

Handset 3, on receiving data coming from main phone 2, turns on speaker 85 and outputs the bell sound from speaker 85.

When the bell coming to main phone 2 pauses, main phone 2 turns off speaker 7a and pauses the bell sounding from speaker 7a. Main phone 2 simultaneously transmits, to handset 3, OFF data of the speaker and OFF data of the bell sounding. Handset 3, on receiving various data coming from main phone 2, turns off speaker 85 and pauses the bell sounding from speaker 85.

When a predetermined time lapses after the finish of the bell sounding, as discussed in Fig. 19 and Fig. 20, main phone 2 turns on speaker 7a and reads aloud the caller information in the male or female tone from speaker 7a as an example of the voice output unit. Main phone 2 simultaneously transmits, to handset 3, ON data of the speaker and voice data of the caller information created by the voice converting unit.

Handset 3, on receiving various data coming from main phone 2, turns on handset speaker 85 and reads the caller name aloud in the same tone as that of main phone 2 from handset speaker 85 as an example of the voice output unit.

After the completion of the reading of the caller name, main phone 2 turns off speaker 7a and pauses the voice output of the caller name from speaker 7a as an example of the voice output unit. Main phone 2 simultaneously transmits OFF data of the speaker to handset 3. Handset 3, on receiving OFF data of the speaker coming from main phone 2, turns off speaker 85 and pauses the voice output of the caller information from speaker 85 as an example of the voice output unit.

Fig. 24 illustrates the case of a single bell, but the case of a double bell is similar to the case described in Fig. 19 and Fig. 20. The aloud outputting method of the caller information is also similar that in Fig. 21. In this method, bell sounding is stopped just after receiving the caller information, or the bell is sounded at certain times after receiving of the caller information and then the bell sounding is stopped.

In a state where handset 3 is mounted on main phone 2, handset 3 does not output the bell sound or the caller information aloud, and main phone 2 simply outputs voice.

In some type of cordless telephone apparatus 1 as a communication apparatus, main phone 2 simply works as a relay station and handset 3 includes almost all telephone functions. In this case, when handset 3 can output the voice of the name information, main phone 2 need not to have speaker 7a as an example of the voice output unit. When main phone 2 has no speaker 7a, handset 3 exceptionally outputs the bell sound and the caller information aloud from handset 3 even when handset 3 is mounted on main phone 2.

In the present embodiment of the present invention, as discussed above, the received caller information is displayed on the display unit, and the main phone or the handset reads the caller name aloud in the male or female tone between bell sounds when the caller information has name information. Therefore, the user can instantly know who is calling even when the user does not see the contents displayed on the display unit.

The communication apparatus of the present embodiment can transmit more accurate and easy-to-understand information to a user of the telephone apparatus, and can certainly set correct voice data in a simple operation. A telephone apparatus connected to a wire telephone line has been described in the present embodiment; however, the present invention can be applied to a radiotelephone such as a cellular phone.

### INDUSTRIAL APPLICABILITY

The present invention provides a communication apparatus such as a telephone apparatus capable of obtaining caller information via a line.

The communication apparatus can advantageously transmit more accurate and easy-to-understand information to a user of the telephone apparatus, and certainly set correct voice data in a simple operation.

## Claims

1. A communication apparatus comprising:
a caller information detector for detecting caller information fed from a communication line;
a first storing unit for storing the information detected by said caller information detector;
a caller identifying unit for identifying a calling place of a caller based on the information stored in said first storing unit;
a second storing unit for storing information of the calling place identified by said caller identifying unit;
a third storing unit for storing predetermined information;
a display unit for displaying information; and
a controller for controlling said display unit to display combined information of the calling place information stored in said second storing unit and the predetermined information stored in said third storing unit.

2. A communication apparatus according to claim 1 further comprising
a speaker for outputting the combined information aloud with said controller.

3. A communication apparatus according to claim 1 further comprising
an auxiliary storing unit for storing the calling place information and a country name of the caller in a mutually corresponding state,
wherein said controller displays the country name stored in said auxiliary storing unit on said display unit based on the calling place information.

4. A communication apparatus comprising:
a caller information detector for detecting caller information fed from a communication line;
a first storing unit for storing the caller information detected by said caller information detector;
a caller identifying unit for identifying a caller based on the information stored in said first storing unit;
a second storing unit for storing specific information of said caller identifying unit;
a third storing unit for storing the caller information, the caller, and related information, the caller being paired with the related information;
a display unit for displaying information; and
a controller for controlling said display unit to display combined information of the specific information stored in said second storing unit, specific result information, and the corresponding related information stored in said third storing unit.

5. A communication apparatus according to claim 4 further comprising
a speaker for outputting the combined information aloud with said controller.

6. A communication apparatus according to claim 4 or claim 5,
wherein the combined information is supplied simultaneously from said display unit and said speaker.

7. A communication apparatus comprising:
a caller information detector for detecting caller information fed from a communication line;
a third storing unit for correspondingly storing the caller information and voice data indicating a reading method of the caller information;
a voice converting unit for outputting the voice data as a voice signal;
a voice data selecting unit for selecting one of a plurality of voice data as voice data of the caller information, when the plurality of voice data are stored correspondingly to the caller information; and
a controller for extracting voice data selected by said voice data selecting unit, and controlling said voice converting unit to output the voice signal, when the plurality of voice data correspond to the caller information detected by said caller information detector.

8. A communication apparatus according to claim 7, wherein
when said storage unit stores a plurality of voice data corresponded to one piece of caller information,
said controller
extracts the plurality of voice data one by one,
controls said voice converting unit to output voice signals, and then,
on detecting a selection signal from said voice data selecting unit, registers, as voice data of the caller information, voice data corresponding to the voice signal output just before the detection.

9. A communication apparatus according to claim 7,
wherein, when said caller information detector detects caller information, the controller extracts a plurality of voice data one by one and controls said voice converting unit to output voice signals.

10. A telephone apparatus comprising:
a caller information detector for detecting caller information fed from a communication line, the caller information including telephone number data and name data;
an auxiliary storing unit for storing a name table and a telephone number list, the name table having the name data and corresponding voice data as an aloud reading method of the name data, the telephone number list having the telephone number data corresponding to the name data;
a voice converting unit for outputting the voice data as a voice signal;
a voice data selecting unit for selecting one voice data when a plurality of voice data are registered in the name table correspondingly to the name data registered in the telephone number list; and
a controller for
storing the voice data selected by said voice data selecting unit in said auxiliary storing unit in relation to the telephone number data registered in the telephone number list,
collating the telephone number data detected by said caller information detector with the telephone number data registered in the telephone number list,
extracting stored voice data when the voice data is stored in relation to each other, and
controlling said voice converting unit to output the voice signal.

11. A telephone apparatus according to claim 10, wherein
said controller
collates the name data registered in the telephone number list with the name data registered in the name table,
extracts a plurality of voice data one by one when the plurality of voice data are registered in the name table correspondingly to one name data,
controls said voice converting unit to output voice signals, and
on detecting a selection signal from said voice data selecting unit, stores voice data of the voice signal output just before the detection as voice data of the name data, in relation to the telephone number data, the telephone number data being registered correspondingly to the name data registered in the telephone number list.

12. A telephone apparatus comprising:
a caller information receiver for receiving caller information coming from a telephone line;
a caller information storage unit for storing the received caller information;
a voice creating unit for creating two types of voice data from the caller information, the respective voice data lying in a predetermined frequency band and in a lower frequency band; and
a voice converting unit for outputting the voice data,
wherein the received caller information is read aloud at one of the two frequency bands based on the received caller information.

13. A telephone apparatus according to claim 12, wherein
said voice creating unit creates voice data in one of the two frequency bands based on name information in the caller information.

14. A telephone apparatus according to claim 12 further comprising an electronic telephone book for registering a telephone number,
wherein, when a telephone number of the received caller information has already registered in said electronic telephone book and when gender information indicating a gender exists in attached information attached to the telephone number registered in said electronic telephone book, said voice creating unit creates voice data in one of the two frequency bands.

15. A telephone apparatus according to claim 14, wherein
when the attached information attached to the telephone number registered in said electronic telephone book has called-party information indicating a correspondence between a caller and a called party, a fact that the caller calls the called party is read aloud based on the called party information.

16. A telephone apparatus according to claim 12, wherein
when call waiting comes during a conversation, a caller name is read aloud based on caller information received from the call waiting.

17. A telephone apparatus according to claim 12, wherein
when the received caller information includes gender information indicating a gender of a caller in itself, voice data in one of the two frequency bands is created based on the gender information of the caller information.

18. A telephone apparatus comprising a main phone and a handset, wherein
said main phone comprises:
a caller information receiver for receiving caller information coming from a communication line;
a caller information storage unit for storing the received caller information; and
a voice creating unit for creating two types of voice data based on the caller information, the respective voice data lying in a predetermined frequency band and in a lower frequency band, and
said handset interactively communicates with the main phone by radio, and has a voice output unit for outputting the voice data.

19. A telephone apparatus according to claim 18 further comprising an electronic telephone book for registering a telephone number,
wherein, when a telephone number of the received caller information has already registered in said electronic telephone book and when gender information indicating a gender exists in attached information attached to the telephone number registered in said electronic telephone book, said voice creating unit creates voice data having one of male and female tones.

20. A cordless telephone apparatus according to claim 18, wherein
when attached information attached to a telephone number registered in said electronic telephone book has called-party information indicating a correspondence between a caller and a called party, a fact that the caller calls the called party is read aloud based on the called party information.

21. A cordless telephone apparatus according to claim 18, wherein
when call waiting comes during a conversation, a caller name is read aloud based on caller information received from the call waiting.

22. A communication apparatus according to claim 18, further comprising a second voice output unit for outputting a caller name aloud.

23. A telephone apparatus according to claim 18, wherein
when the received caller information includes gender information indicating a gender of a caller in itself, voice data in one of the two frequency bands is created based on the gender information of the caller information.
